Europäisches Patentamt

European Patent Office

Office européen des brevets

(19)

(11) Numéro de publication : **0 428 439 B1**

# (12) FASCICULE DE BREVET EUROPEEN

(45) Date de publication du fascicule du brevet :
29.04.92 Bulletin 92/18

(51) Int. Cl.⁵ : **B60G 21/02**

(21) Numéro de dépôt : **90403160.6**

(22) Date de dépôt : **07.11.90**

---

(54) **Dispositif anti-dévers pour véhicule automobile.**

---

(30) Priorité : **13.11.89 FR 8915366**

(43) Date de publication de la demande :
**22.05.91 Bulletin 91/21**

(45) Mention de la délivrance du brevet :
**29.04.92 Bulletin 92/18**

(84) Etats contractants désignés :
**DE GB IT**

(56) Documents cités :
**FR-A- 1 271 895**
**US-A- 2 791 128**
**PATENT ABSTRACTS OF JAPAN vol. 10, no.
174 (M-490)(2230) 19 juin 1986, & JP-A-61 24609
(NIPPON DENSO) 03 février 1986**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Clairenbeaud, Michel**
**41, rue de Vauhallan**
**F-91120 Palaiseau (FR)**

(74) Mandataire : **Boivin, Claude**
**9, rue Edouard-Charton**
**F-78000 Versailles (FR)**

EP 0 428 439 B1

## Description

La présente invention a pour objet un dispositif anti-dévers pour véhicule automobile qui permet de redresser l'assiette en dévers du véhicule lorsque celui-ci est soumis à l'effet de la force centrifuge, par exemple au cours d'un virage.

Ce dispositif est du type comprenant une barre anti-roulis constituée de deux demi-barres réunies l'une à l'autre par un vérin rotatif, qui comporte un piston déplaçable dans un corps, qui est cylindrique et solidaire de l'une des demi-barre, et des moyens sensibles au dévers du véhicule pour déplacer le piston dans ce corps; un tel dispositif est décrit dans le document FR-A-1 271 895.

Le dispositif selon l'invention est caractérisé en ce que le piston présente un filetage interne propre à coopérer avec un filetage ménagé sur une vis disposée coaxialement dans le corps et solidaire de celui-ci ainsi qu'un filetage externe de sens inverse de celui du filetage interne et propre à coopérer avec un filetage prévu sur un fourreau cylindrique monté à rotation dans le corps et solidaire de l'autre demi-barre.

On a décrit ci-après, à titre d'exemple non limitatif, un mode de réalisation du dispositif anti-dévers selon l'invention, avec référence au dessin annexé dans lequel :

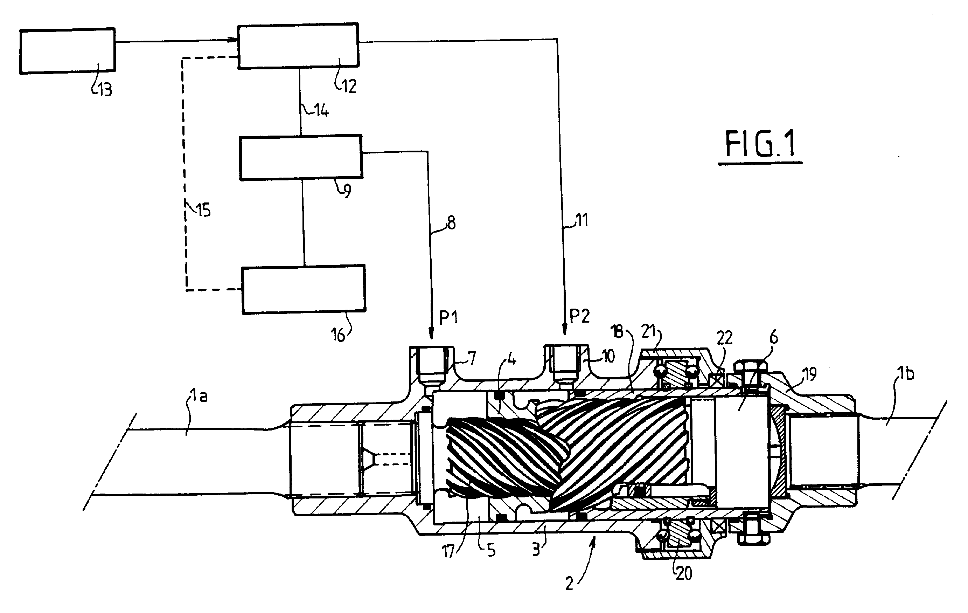

La Figure 1 est un schéma du dispositif, le vérin rotatif étant représenté en coupe axiale;

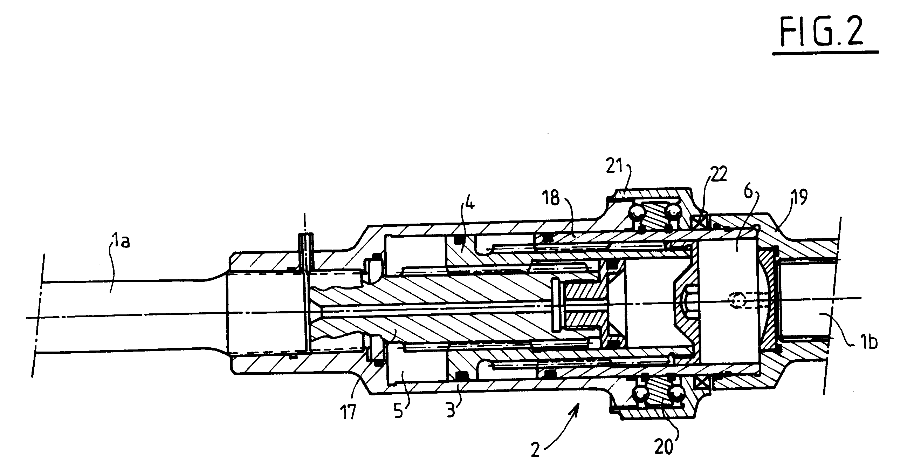

La Figure 2 est une autre vue en coupe axiale du vérin rotatif.

Tel qu'il est représenté au dessin, le dispositif anti-dévers selon l'invention comprend une barre anti-dévers qui est constituée de deux demi-barres 1a et 1b réunies l'une à l'autre par un vérin rotatif désigné dans son ensemble par la référence 2.

Le vérin 2 comprend un corps cylindrique 3 qui est solidaire de la demi-barre 1a et dans lequel est monté coulissant un piston 4 définissant deux chambres 5 et 6. La chambre 5 communique par un raccord 7 avec un conduit 8 relié à une pompe 9; de son côté la chambre 6 communique par un raccord 10 avec un conduit 11 relié à un correcteur à tiroir hydraulique 12; ce dernier est commandé par un capteur 13 et permet de mettre en communication le conduit 11 soit avec un conduit 14 relié à la pompe 9 pour augmenter la pression dans la chambre 6, soit avec un conduit 15 relié à un réservoir 16 pour diminuer la pression dans la chambre 6.

Le piston 4 comporte un taraudage axial et est monté sur une vis 17 solidaire du corps 3 et coaxiale à celui-ci. Par ailleurs, il comporte un filetage extérieur de pas contraire et est monté dans un fourreau 18 emmanché dans le corps 1 et solidaire d'un boîtier 19, lui-même solidaire de la demi-barre 1b; le fourreau 18 est immobilisé latéralement par une butée à billes 20 qui est solidaire du fourreau et est interposée entre le corps 3 et un chapeau 21 vissé sur ce corps et monté sur le fourreau par l'intermédiaire d'un roulement 22.

La surface active du piston 4 dans la chambre 5 est pratiquement sa surface annulaire autour de la vis 17 alors que celle dans la chambre 6 est sa surface intérieure au corps 3 et est donc plus grande.

En position neutre d'équilibre, le piston 4 est sensiblement au milieu de sa course totale; dans cette position, l'équilibre des forces de part et d'autre du piston 4 est donné par la relation P2 S2 = P1 S1, la pression régulée P2 est donc plus faible que la pression d'alimentation P1.

Lorsqu'il y a modification du dévers du véhicule, le correcteur 12 modifie la pression P2 et le piston 4 se déplace longitudinalement dans le corps 3. Du fait du montage du piston sur la vis 17, ce piston pivote en même temps d'un angle $\alpha 1$. Mais du fait du montage hélicoïdal du piston dans le fourreau 18 immobilisé longitudinalement par la butée 20, le déplacement longitudinal du piston entraîne un pivotement d'un angle $\alpha 2$ du fourreau 18. En définitive le fourreau 18 pivote par rapport au corps 3 d'un angle $\alpha 1 + \alpha 2$ et il en est de même des deux demi-barres 1a et 1b qui sont respectivement solidaires de ces éléments; ce pivotement se poursuit jusqu'à ce que le dévers soit annulé : le capteur 13 ramène alors le correcteur 12 en position d'équilibre et donc P2 à sa valeur initiale.

## Revendications

1. Dispositif anti-dévers comprenant une barre anti-roulis constituée de deux demi-barres (1a et 1b) réunies l'une à l'autre par un vérin rotatif (2), qui comporte un piston (4) déplaçable dans un corps (3), qui est cylindrique et solidaire de l'une des demi-barres, et des moyens sensibles au dévers du véhicule pour déplacer le piston dans ce corps, caractérisé en ce que le piston (4) présente un filetage interne propre à coopérer avec un filetage ménagé sur une vis (17) disposée coaxialement dans le corps (3) et solidaire de celui-ci ainsi qu'un filetage externe de sens inverse de celui du filetage interne et propre à coopérer avec un filetage prévu sur un fourreau cylindrique (18) monté à rotation dans le corps (3) et solidaire de l'autre demi-barre.

2. Dispositif selon la revendication 1, caractérisé en ce que, pour immobiliser en translation les deux demi-barres (1a et 1b) l'une par rapport à l'autre, le dispositif est muni de moyens comprenant une butée à billes (20) solidaire du fourreau cylindrique (18) et interposée entre le corps (3) et un chapeau (21) vissé sur le corps.

## Patentansprüche

1. Antineigungsvorrichtung mit einem Stabilisatorstab, der aus zwei Halbstäben (1a, 1b) besteht, die über einen drehenden Zylinder (2) miteinander verbunden sind, der einen Kolben (4) aufweist, welcher in einem Gehäuse (3) verschiebbar angeordnet ist, das zylindrisch ausgebildet und mit einem der Halbstäbe fest verbunden ist und mit auf die Neigung des Kraftfahrzeugs ansprechenden Mitteln zur Verschiebung des Kolbens im Gehäuse,
dadurch gekennzeichnet, daß der Kolben (4) ein Innengewinde aufweist, das zum Zusammenwirken mit einem Gewinde auf einer Schraube (17) geeignet ist, die koaxial im Gehäuse (3) angeordnet und mit diesem fest verbunden ist, sowie ein Außengewinde, dessen Schraubensinn entgegengesetzt zum Schraubensinn des Innengewindes verläuft und das zum Zusammenwirken mit einem Gewinde auf einer zylindrischen Hülse (18) geeignet ist, die drehbar im Gehäuse (3) angeordnet und fest mit dem anderen Halbstab verbunden ist.

2. Vorrichtung nach Anspruch 1, dadurch gekennzeichnet,
daß zum Sperren einer Längsbewegung der beiden Halbstäbe (1a und 1b) gegeneinander die Vorrichtung mit Mitteln versehen ist, die ein Axialkugellager (20) aufweisen, das mit der zylindrischen Hülse (18) fest verbunden und zwischen das Gehäuse (3) und eine auf das Gehäuse aufgeschraubte Kappe (21) eingeschaltet ist.

## Claims

1. Anti-roll device including one anti-roll bar formed of two half-bars (1a and 1b) interconnected by a rotary jack (2) which comprises a piston (4) able to move inside a body (3) which is cylindrical and integral with one of the half-bars, and means sensitive to the rolling motion of the vehicle so as to move the piston inside this body,
wherein the piston (4) has an internal thread able to cooperate with a thread fitted on a screw (17) disposed coaxially inside the body (3) and integral with the latter, as well as an external thread of a direction opposite that of the internal thread and able to cooperate with a thread provided on a cylindrical sheath (18) rotary-mounted in the body (3) and integral with the other half-bar.

2. Device according to claim 1,
wherein, so as to translation-immobilize the two half-bars (1a and 1b) with respect to each other, the device is provided with means including a thrust ball bearing (20) integral with the cylindrical sheath (18) and inserted between the body (3) and a cap (21) screwed onto the body.

FIG.1

EP 0 428 439 B1

FIG.2